Europäisches Patentamt

European Patent Office

Office européen des brevets

(19)

(11)  EP 1 643 776 A1

(12)  **EUROPEAN PATENT APPLICATION**
published in accordance with Art. 158(3) EPC

(43) Date of publication:
05.04.2006 Bulletin 2006/14

(21) Application number: 03738565.5

(22) Date of filing: 30.06.2003

(51) Int Cl.:
*H04N 13/04* (1985.01)

(86) International application number:
PCT/JP2003/008257

(87) International publication number:
WO 2005/004498 (13.01.2005 Gazette 2005/02)

(84) Designated Contracting States:
NL

(71) Applicant: OTSUKA ELECTRONICS CO., LTD.
Hirakata-shi
Osaka 573-1132 (JP)

(72) Inventors:
• OKA, Koichi
Otsu-shi, Shiga 520-0867 (JP)

• ENAMI, Yoshi,
Ritto-shi, Shiga 5203031 (JP)

(74) Representative: Hoffmann, Klaus
Hoffmann - Eitle
Patent- und Rechtsanwälte
Arabellastrasse 4
D-81925 München (DE)

(54)  **SYSTEM AND METHOD FOR MEASURING/EVALUATING MOVING IMAGE QUALITY OF SCREEN**

(57)  A screen motion image quality measuring/evaluating apparatus according to the present invention comprises: a rotatable mirror 2; a camera 3 for capturing a screen through the mirror 2; and a control unit 6. The control unit 6 is arranged to control such that when it is detected based on a change in the luminance of a screen 5 that a test pattern contained in a motion image displayed on the screen 5 has passed a predetermined position of the screen 5, a trigger for rotation is given to the mirror 2, and such that after the start of rotation of the mirror 2, the mirror 2 rotates as keeping pace with the movement of the test pattern. Without electric synchronism of rotation with a motion image signal, a trigger for rotation can be given to the mirror 2. Thus, the quality of a motion image on the screen can be measured with a simple structure.

FIG. 1

EP 1 643 776 A1

**Description**

BACKGROUND OF THE INVENTION

Field of the Invention

The present invention relates to screen motion image quality measuring/evaluating apparatus and method capable of measuring and evaluating, based on the movement of a test pattern displayed on the screen of a display device to be evaluated, the quality of a motion image on the screen.

Description of Related Art

It has been a common practice that a motion image is displayed on the screen of a display device such as an liquid-crystal, display (LCD), a cathode-ray tube display (CRT), a plasma display (PDP), an electroluminescence display (EL) or the like and the movement on the screen is measured to evaluate the motion image quality. Examples of this evaluating method include a method in which a camera pursues, like an eyeball, the movement of a motion image and takes its image as a still image, and the still image thus captured is evaluated for definition. In particular, in a display device in which the image holding time is long like in an LCD, the image edge is blurred. The reduction in definition is digitalized and the value thus digitalized is used as an index. This is an example of the screen motion image quality evaluating method.

There is conventionally known a motion image quality evaluating apparatus which comprises a rotatable mirror and a camera for taking a picture of the screen of a display device to be evaluated through the mirror, and in which the mirror rotation is controlled with the use of a synchronizing signal of amotion image video signal such that the picture can be captured as a still image (Japanese Patent Laid-Open Publication No. 2001-54147).

In the motion image quality evaluating apparatus mentioned above, however, it is required to prepare a trigger signal for actuating the mirror rotation based on the synchronizing signal of a motion image video signal. This requires developing a signal preparing circuit for preparing such a trigger signal. This takes time and costs for such development. Accordingly, there is desired a screen motion image quality evaluating apparatus capable of more readily preparing a trigger for the rotation of the mirror.

In view of the foregoing, it is an object of the present invention to provide screen motion image quality measuring/ evaluating apparatus and method by which an image having pursued the movement of a motion image displayed on the screen of a display device to be evaluated can be obtained on the image sensor detection screen with a simple arrangement without electric synchronism with a motion image video signal.

SUMMARY OF THE INVENTION

A screen motion image quality measuring/evaluating apparatus according to the present invention comprises: a rotatable mirror; an image sensor for capturing a screen through the mirror; a rotational driving unit for rotationally driving the mirror; a control unit connected to the rotational driving unit; and an image processing unit, the control unit being arranged such that when it is detected based on a change in the luminance of a detection screen of the image sensor that a test pattern displayed on the screen has passed a predetermined position on the screen, a rotational driving signal is supplied to the rotational driving unit such that the mirror starts rotating as keeping pace with the movement of the test pattern (Claim 1).

According to the above-mentioned arrangement, when it is detected based on a change in the luminance of the detection screen of the image sensor that the test pattern contained in a motion image displayed on the screen has passed a predetermined position on the screen, the control unit can give, based on a detection signal, a trigger for rotation to the rotational driving unit. After the mirror has started rotating, the control unit controls such that the mirror rotates as keeping pace with the movement of the test pattern. Accordingly, without electric synchronism with a motion image signal, a still image according to the movement of the test pattern can be obtained on the detection screen of the image sensor.

After the test pattern displayed on the screen has started moving, the screen is captured more than once by the image sensor, and it can be detected, based on the images thus captured more than once, whether or not the test pattern has passed a predetermined position of the screen (Claim 2).

The present invention may be arranged such that the test pattern repeatedly appears on the screen and moves in the same direction at the same velocity, that the control unit is arranged to observe the image of the test pattern appearing on the detection screen of the image sensor during the rotation of the mirror, and to determine the mirror rotational velocity at which the image stands still, and that the rotational driving signal supplied to the rotational driving unit comprises information instructing that the mirror rotates at the rotational velocity thus determined (Claim 3). According to the above-mentioned arrangement, during the rotation of the mirror, the test pattern is captured and the resulting image is observed. This image stands still when the mirror perfectly keeps pace with the movement of the test pattern. Accordingly, the mirror rotational velocity at which the image stands still can be determined as an optimum rotational velocity. Whether or not the image stands still may be judged, for example, whether or not the edge in which the image is contained appears on the same position at each capturing.

The present invention may be arranged such that the test pattern repeatedly appears on the screen and moves in the same direction at the same velocity, that the control unit is arranged to observe a test pattern blurred edge width which appears, along the scanning direction, on the detection screen of the image sensor during the rotation of the mirror, and to determine the mirror rotational velocity at which the blurred edge width is minimized, and that the rotational driving signal supplied to the rotational driving unit comprises information instructing that the mirror rotates at the rotational velocity thus determined (Claim4). According to the above-mentioned arrangement, during the rotation of the mirror, the test pattern is captured and its blurred edge width is observed. This blurred edge width is minimized when the mirror perfectly keeps pace with the movement of the test pattern. Accordingly, the mirror rotational velocity at which the blurred edge width is minimized can be determined as an optimum rotational velocity.

Preferably, the image processing unit is arranged to evaluate the screen motion image quality with the use of the minimized blurred edge width (Claim 5) . The minimized blurred edge width serves as a parameter indicating the quality of a motion image on the screen. Accordingly, the screenmotion image quality can be evaluated with the use of the blurred edge width.

In addition to the still image judging method and the blurred edge width observing method, there are methods of optimizing the mirror rotational velocity. The control unit may be arranged to calculate the moving velocity of the test pattern based on the movement of the test pattern appearing on the detection screen of the image sensor while the mirror is fixed, and to determine the mirror rotational velocity based on the test pattern moving velocity thus calculated (Claim 6).

A screen motion image quality measuring/evaluating apparatus according to the present invention comprises: a rotatable mirror; an image sensor for capturing a screen through the mirror; a rotational driving unit for rotationally driving the mirror; a control unit connected to the rotational driving unit; and an image processing unit, the test pattern repeatedly appearing on the screen and moving in the same direction at the same velocity, and the control unit being arranged to observe the image of the test pattern appearing on the detection screen of the image sensor during the rotation of the mirror, to determine the mirror rotational velocity at which the image stands still, and to rotationally drive the mirror at the rotational velocity thus determined (Claim 8). According to the above-mentioned arrangement, the test pattern is captured during the rotation of the mirror and the resulting image is observed. This image stands still when the mirror perfectly keeps pace with the movement of the test pattern. Accordingly, the mirror rotational velocity at which the image stands still can be determined as an optimum rotational velocity. Whether or not the image stands still may be judged for example whether or not the edge in which the image is contained appears on the same position at each capturing. Thus, the mirror optimum rotational velocity can be determined without knowing the structural constants of the screen motion image quality measuring/evaluating apparatus.

A screen motion image quality measuring/evaluating apparatus according to the present invention comprises: a rotatable mirror; an image sensor for capturing a screen through the mirror; a rotational driving unit for rotationally driving the mirror; a control unit connected to the rotational driving unit; and an image processing unit, the test pattern repeatedly appearing on the screen and moving in the same direction at the same velocity, and the control unit being arranged to observe a test pattern blurred edge width which appears, along the scanning direction, on the detection screen of the image sensor during the rotation of the mirror, to determine the mirror rotational velocity at which the blurred edge width is minimized, and to rotationally drive the mirror at the rotational velocity thus determined (Claim 9).

According to the above-mentioned arrangement, the test pattern is captured during the rotation of the mirror and its blurred edge width is observed. This blurred edge width is minimized when the mirror perfectly keeps pace with the movement of the test pattern. Accordingly, the mirror rotational velocity at which the blurred edge width is minimized can be determined as an optimum rotational velocity, and the mirror is so controlled as to rotate at the rotational velocity thus determined. Thus, the mirror optimum rotational velocity can be determined without knowing the structural constants of the screen motion image quality measuring/evaluating apparatus. When the mirror rotates at this rotational velocity, a still image according to the test pattern movement can be obtained on the detection screen of the image sensor.

Preferably, the image processing unit is arranged to evaluate the quality of a motion image on the screen with the use of the minimized blurred edge width (Claim 10). The minimized blurred edge width serves as a parameter indicating the quality of a motion image on the screen. Accordingly, the screen motion image quality can be evaluated with the use of the blurred edge width.

A screen motion image quality measuring/evaluating method according to the present invention is arranged to measure and evaluate, based on the movement of a test pattern displayed on the screen of a display device to be evaluated, the quality of a motion image on the screen, and this method comprises the steps of: capturing an image of the test pattern while the test pattern is moved on the screen at a predetermined velocity and while the visual field of an image sensor is moved on the screen; and determining the moving velocity of the image sensor visual field at which the test pattern image position stands still, and evaluating the quality of a motion image on the screen based on the test pattern image captured at the velocity thus predetermined (Claim 12). According to this method, while the image sensor visual field is moved, the test pattern under movement is captured and the resulting image is observed. When the image sensor visual field perfectly keeps pace with the movement of the test pattern, the image stands still. Accordingly, the moving velocity of the image sensor visual field at which the image stands still can be determined as an optimum moving velocity, and the quality of a motion image on the screen can be evaluated based on the test pattern still image captured at the velocity thus determined. Whether or not the image stands still may be judged, for example, whether or not the edge in which the image is contained, appears on the same position at each capturing.

A screen motion image quality measuring/evaluating method according to the present invention is arranged to measure and evaluate, based on the movement of a test pattern displayed on the screen of a display device to be evaluated, the quality of a motion image on the screen, and this method comprises the steps of: capturing an image of the test pattern while the test pattern is moved on the screen at a predetermined velocity and while the visual field of an image sensor is moved on the screen; observing a blurred edge width appearing, along the scanning direction, on the test pattern image thus captured; and determining the moving velocity of the image sensor visual field at which the blurred edge width is minimized, and evaluating the quality of a motion image on the screen based on the test pattern image captured at the velocity thus predetermined (Claim 13). According to this method, while the image sensor visual field is moved, the test pattern under movement is captured and its blurred edge width is observed. When the image sensor visual field perfectly keeps pace with the movement of the test pattern, the blurred edge width is minimized. Accordingly, the moving velocity of the image sensor visual field at which the blurred edge width is minimized can be determined as an optimum moving velocity, and the quality of a motion image on the screen can be evaluated based on the test pattern still image captured at the velocity thus determined.

A screen motion image quality measuring/evaluating apparatus according to the present invention may comprise: a rotatable mirror; an image sensor for capturing a screen through the mirror; a rotational driving unit for rotationally driving the mirror; a control unit connected to the rotational driving unit; and an image processing unit, and the test pattern may repeatedly appear on the screen and may move in the same direction at the same velocity, and the control unit may be arranged to calculate the moving velocity of the test pattern based on the movement of the test pattern appearing on the detection screen of the image sensor while the mirror is fixed, to determine the mirror rotational velocity based on the test pattern moving velocity thus calculated, and to rotationally drive the mirror at the rotational velocity thus determined (Claim 14). With the above-mentioned arrangement, too, when it is supposed that the test pattern repeatedly appears on the screen and moves in the same direction at the same velocity, (i)one test pattern is captured while the mirror is fixed, (ii) the moving velocity of the test pattern is calculated based on the movement of the test pattern on the detection screen of the image sensor, (iii) the optimum rotational velocity of the mirror is determined based on the test pattern moving velocity thus calculated, and (iv) the mirror is controlled so as to rotate at the rotational velocity thus determined. Accordingly, a still image according to the test pattern movement can be obtained on the detection screen of the image sensor.

A screen motion image quality measuring/evaluating method according to the present invention is arranged to measure and evaluate, based on the movement of a test pattern displayed on the screen of a display device to be evaluated, the quality of a motion image on the screen, and this method comprises the steps of: capturing an image of the test pattern more than once while the test pattern is moved on the screen at a predetermined velocity and while the visual field of an image sensor is fixed on the screen; observing the moving velocity, on the detection screen, of the test pattern image thus captured; and calculating and determining the moving velocity of the image sensor visual field corresponding to the moving velocity of the test pattern image on the detection screen, and evaluating the quality of a motion image on the screen based on the test pattern image captured at the velocity thus determined (Claim 16) . The quality of a motion image on the screen can be evaluated based on the test pattern still image captured at the velocity thus determined.

The present invention may be realized by comprising a rotatable camera and a rotational driving unit for rotationally driving the camera, instead of: the rotatable mirror; the image sensor for capturing a screen through the mirror; and the rotational driving unit for rotationally driving the mirror (Claims 7, 11, 15). If light in weight, the camera can be rotated according to the movement of the test pattern with a less rotational driving force.

According to the present invention discussed in the foregoing, the control unit is arranged to give a trigger for rotation to the rotational driving unit, and to control the mirror so as to rotate as keeping pace with the movement of the test pattern. Accordingly, without any electric synchronism with a motion image signal, a still image having pursued the movement of the test pattern can be obtained on the detection screen of the image sensor. Accordingly, the quality of a motion image on the screen can be measured and evaluated with a simple structure.

BRIEF DESCRIPTION OF THE DRAWINGS

Fig. 1 is a block diagram illustrating the arrangement of a screen motion image quality measuring/evaluating apparatus according to an embodiment of the present invention;

Fig. 2 is a view illustrating the positional relationship between a detection face 31 of a CCD camera 3 and a screen 5 of a display device to be evaluated;

Fig. 3 is a view illustrating the movement of a test pattern P displayed on the detection face 31 of the CCD camera 3 when the test pattern P is moving on the screen 5 at a uniform velocity;

Fig. 4 is a graph illustrating the relationship between the CCD camera exposure amount and time;

Fig. 5 is a view illustrating how the image of the test pattern P moves on the detection face 31 of the CCD camera 3;

Fig. 6 shows luminance distributions of images detected more than once by the CCD camera detection face 31 during the rotation of a galvanometer mirror 2, in which Fig. 6(a) shows the luminance distribution at the time when the rotational velocity is not proper, while Fig. 6 (b) shows the luminance distribution at the time when the rotational velocity is proper;

Fig. 7 is a graph illustrating the relationship between the CCD camera exposure amount and time;

Fig. 8 shows luminance distributions of images detected by the CCD camera detection face 31 during the rotation of the galvanometer mirror 2, in which the broken line shows the luminance distribution at the time when the rotational velocity is not proper, while the solid line shows the luminance distribution at the time when the rotational velocity is proper;

Fig. 9 shows how the image of the test pattern P moves on the detection face 31 of the CCD camera 3, in which Fig. 9 (a) shows the image of the test pattern P at the initial stage immediately after the start of movement, while Fig. 9(b) shows the image of the test pattern P which has reached in the vicinity of the center of the detection face 31 of the CCD camera 3;

Fig. 10 shows a luminance distribution of the image of the test pattern P detected, at the initial stage immediately after the start of movement, by the CCD camera detection face 31;

Fig. 11 shows a luminance distribution of the image of the test pattern P detected, at an intermediate stage after the start of movement, by the CCD camera detection face 31;

Fig. 12 shows a luminance distribution of the image of the test pattern P detected, at the initial stage immediately after the start of movement, by the CCD camera detection face 31; and

Fig. 13 shows a luminance distribution of the image of the test pattern P detected, at an intermediate stage after the start of movement, by the CCD camera detection face 31.

DESCRIPTION OF THE PREFERRED EMBODIMENTS

The following description will discuss in detail embodiments of the present invention with reference to the attached drawings.

- Arrangement of the Measuring Apparatus -

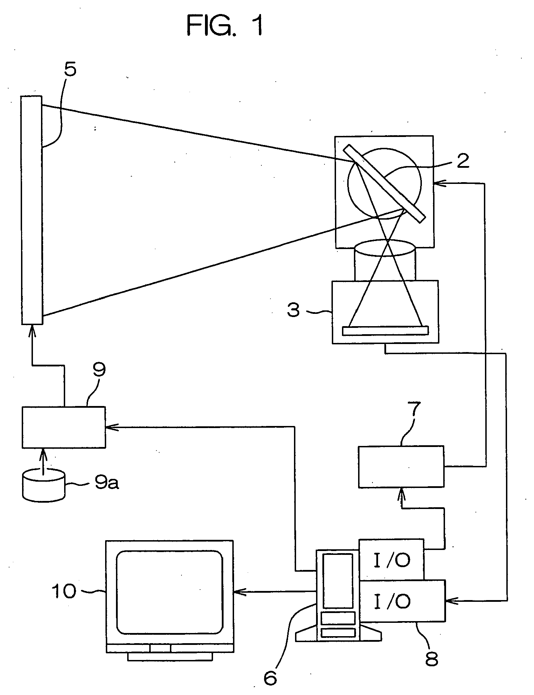

Fig. 1 is a block diagram illustrating the arrangement of a screen motion image quality measuring/evaluating apparatus according to the present invention. This apparatus comprises a galvanometer mirror 2 and a CCD camera 3 for capturing, through the galvanometer mirror 2, a screen 5 of a display device to be evaluated.

The galvanometer mirror 2 comprises: a permanent magnet rotatably disposed in a magnetic field generated by applying an electric current to a coil; and a mirror mounted on a rotary shaft of the permanent magnet such that the mirror can be smoothly and quickly rotated.

The CCD camera 3 has a visual field covering a part or whole of the screen 5 of the display device to be evaluated. The galvanometer mirror 2 is disposed between the CCD camera 3 and the screen 5. According to the rotation of the galvanometer mirror 2, the visual field of the CCD camera 3 can be moved on the screen 5 in a one-dimensional direction (hereinafter referred to as the scanning direction). A computer control unit 6 is arranged to send a rotation signal to the galvanometer mirror 2 through a galvanometer mirror drive controller 7. An image signal obtained by the CCD camera 3 is fetched by the computer control unit 6 through an image fetching I/O board 8.

Instead of the arrangement in which the galvanometer mirror 2 and the CCD camera 3 are separately disposed, a CCD camera such as a light-weight digital camera or the like may be disposed on a rotary stand and rotationally driven by a rotational driving motor.

The computer control unit 6 is arranged to send, to an image signal generator 9, a display control signal for selecting the display screen 5. Based on the display control signal, the image signal generator 9 supplies, to the display device to be evaluated, an image signal (which is stored in an image memory 9a) for displaying in motion a test pattern P. Further, a liquid-crystal display 10 is connected to the computer control unit 6.

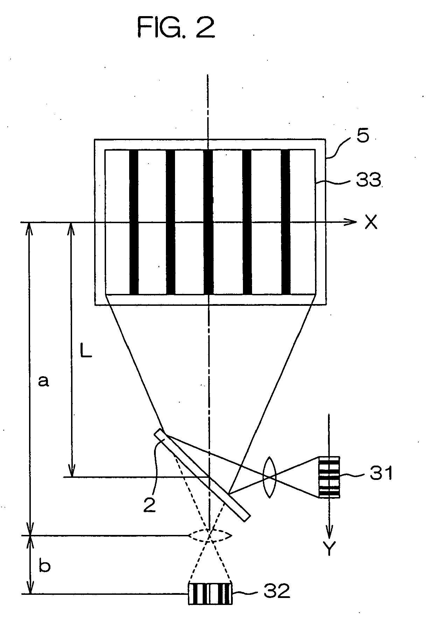

Fig. 2 is an optical path view illustrating the positional relationship between the detection face 31 of the CCD camera 3 and the screen 5 of the display device to be evaluated. The light ray on the screen 5 from the visual field 33 of the CCD camera 3 is reflected by the galvanometer mirror 2, then incident upon the lens of the CCD camera 3 and then detected by the detection face 31 of the CCD camera 3. At the back side of the galvanometer mirror 2, a mirror image 32 of the detection face 31 of the CCD camera 3 is drawn by a broken line.

It is now supposed that the distance along the optical path between the display device to be evaluated and the galvanometer mirror 2 is L, that the distance along the optical path between the display device to be evaluated and the lens is a, and that the distance between the lens and the detection face 31 is b. Here, when the focal distance f of the lens is known, the relationship between a and b can be obtained with the use of the following equation:

$$1/f = 1/a + 1/b$$

The coordinates in the scanning direction of the screen 5 of the display device to be evaluated are designated by X. The detection coordinates in the scanning direction on the detection face 31 of the CCD camera 3 are designated by Y. The original point X0 of X is set at the center of the screen of the display device to be evaluated, and the original point Y0 of Y is set at the point corresponding to the original point X0. When M is the magnification of the lens of the CCD camera 3, the following equation is established:

$$X = -MY \quad (M > 0)$$

With the use of a and b mentioned above, the magnification M is expressed as follows:

$$M = b/a$$

Now, when the galvanometer mirror 2 is rotated by an angle $\theta$, the corresponding position on the screen 5 of the display device to be evaluated is shifted by an angle $2\theta$ with respect to the center of the rotary shaft of the galvanometer mirror 2. The coordinates X on the screen 5 of the display device to be evaluated which correspond to this angle $2\theta$ are expressed as follows:

$$X = L \tan 2\theta$$

When this equation is modified, the following equation is obtained:

$$\theta = \arctan (X/L)/2$$

When the equation $X = L \tan 2\theta$ is differentiated with respect to time, the following equation is obtained:

$$v = 2L \, \omega \cos^{-2}(2\theta) \qquad (a)$$

wherein v is the moving velocity on the screen of the visual field 33, $\omega$ is the rotational angular velocity of the galvanometer mirror 2 ($\omega = d\theta/dt$). When $\theta$ is a very small angle, $\cos^2(2\theta)$ can be regarded as 1. Accordingly, the above equation can be expressed as follows:

$$\omega = v/2L \qquad (b)$$

Thus, it can be considered that the moving velocity v on the screen of the visual field 33 and the rotational angular velocity ω of the galvanometer mirror 2 are in a proportional relationship.

- Rotation Control of the Galvanometer Mirror -

It is now supposed that the test pattern is an edge vertical to the scanning direction X on the screen 5. It is now supposed that the test pattern moves at uniform velocity in the +X direction on the screen 5 of the display device to be evaluated. It is now supposed that the luminance of a portion in the +X direction at the front with respect to the edge is high, and that the luminance of a portion in the -X direction at the back with respect to the edge is low.

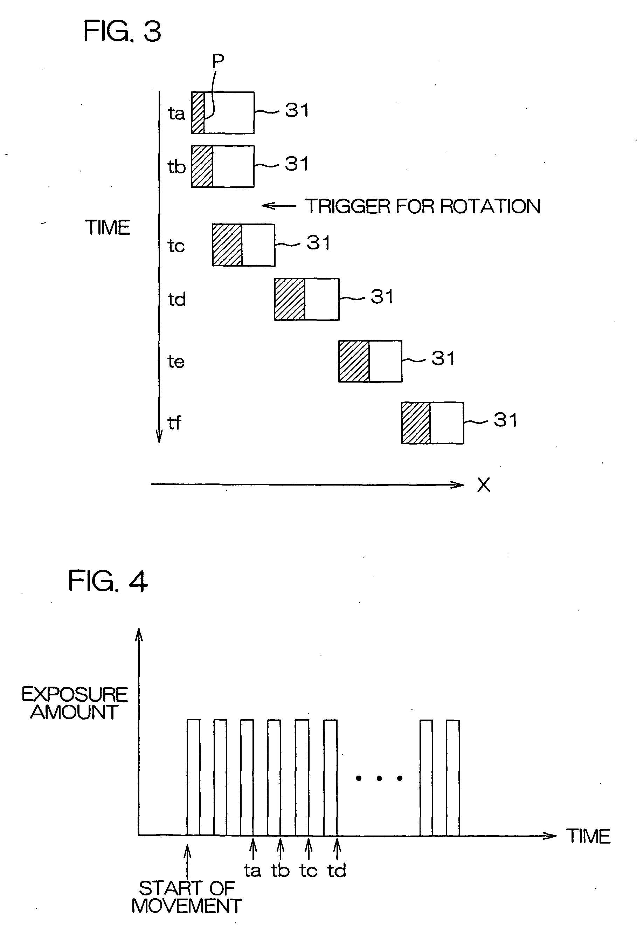

Fig. 3 is a view illustrating the movement of the test pattern P displayed on the detection face 31 of the CCD camera 3 when the test pattern P moves at uniform velocity on the screen 5. The axis of ordinates represents time t, while the axis of abscissas represents the X coordinate. It is now supposed that the galvanometer mirror 2 is fixed at time ta through tb, and that the galvanometer mirror 2 is under rotation at time tc through tf.

While the galvanometer mirror 2 is fixed after the test pattern P has started moving, a short period of time is set as the exposure time of the CCD camera 3 and a picture is frequently taken at short time intervals. On the detection face 31 of the CCD camera 3, the image of the test pattern P (i.e., the edge) is moved, according to the movement of the test pattern P, in the -Y direction at each capturing.

For example, it is now supposed that the number of picture elements in the transverse direction is 1024, and that the test pattern P passes through the 1024 picture elements in 1.4 second. For example, it is now supposed that the exposure time of the CCD camera 3 is set at 1/20 seconds, and that a picture is frequently taken at time intervals of 0.1 second.

Fig. 4 is a graph illustrating the relationship between the exposure amount of the CCD camera 3 and time when a picture is frequently taken in the above-mentioned manner.

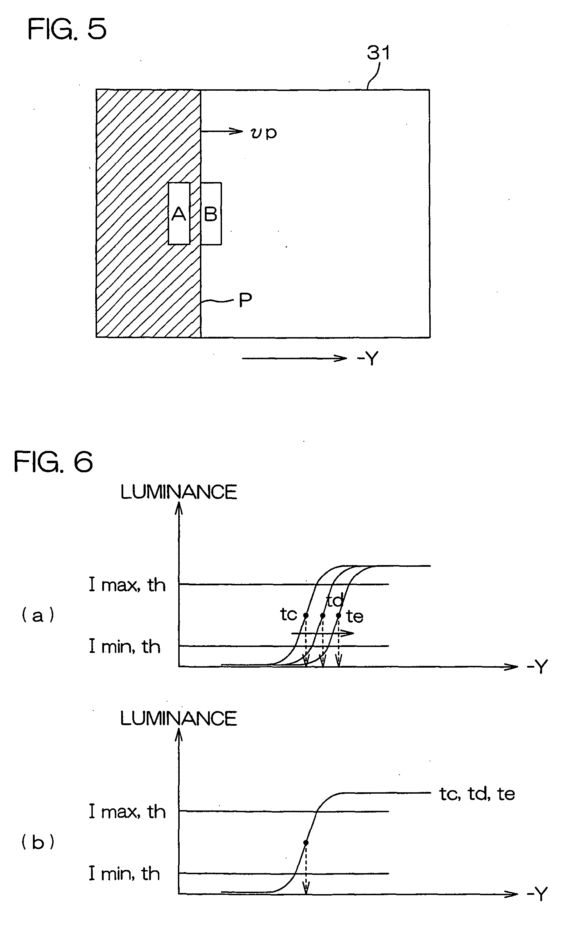

With reference to Fig. 5, the description will discuss how to determine timings at which a trigger for rotation is given to the galvanometer mirror 2. Fig. 5 is a view illustrating how the image of the test pattern P moves on the detection face 31 of the CCD camera 3 at velocity vp. At predetermined positions of the detection face 31 of the CCD camera 3, there are two zones A, B adjacent to each other in the -Y direction. Setting of the zones A, B is made by the computer control unit 6.

The computer control unit 6 detects (i) the capturing point of time (for example, ta in Fig. 4) at which the test pattern P covers the zone A substantially in its entirety, but does not enter the zone B, and (ii) the capturing point of time (for example tb in Fig. 4) at which the test pattern P covers the whole zone A and subsequently enters a part of the zone B. More specifically, the computer control unit 6 detects the point of time at which the average luminance in the zone A does not change and the average luminance in the zone B undergoes a change in the decrease direction. This point of time (tb) is referred to as the timing of a trigger for the rotation of the galvanometer mirror 2. When the zones A, B are set as vertically long, the number of picture elements is increased, thus further improving the trigger timing detection precision.

Thus, the zones are formed on the detection face 31 of the CCD camera 3 and trigger timing is detected. It is therefore possible to give a trigger for rotation to the galvanometer mirror 2 when the test pattern P arrives at a predetermined position in the detection face 31.

After a trigger for rotation has been given to the galvanometer mirror 2, it is required to set the rotational angular velocity of the galvanometer mirror 2 to an optimum value. When the rotational angular velocity of the galvanometer mirror 2 is proper, the image of the test pattern P stands still and a relatively sharp edge appears in the detection face 31 of the CCD camera 3. If the rotational angular velocity is not proper, the image of the test pattern P unsteadily moves, during light exposure, on the detection face 31 of the CCD camera 3, causing the edge image to get blurred. This includes not only blurring based on the motion image quality of the display device to be evaluated, but also blurring based on the disagreement of the rotational angular velocity of the galvanometer mirror 2 with respect to the moving velocity of the test pattern P.

Fig. 6 shows images of the test pattern P on the detection face 31 of the CCD camera 3 after a trigger for rotation has been given to the galvanometer mirror 2. That is, Fig. 6 shows luminance distributions of images detected by the CCD camera detection face 31 while the galvanometer mirror 2 is under rotation. In Fig. 6, the axis of abscissas represents the picture elements arranged in the scanning direction, while the axis of ordinates represents the luminance. In Fig. 6, "Imax,th" is the luminance lowered by a certain rate (for example 10%) from the maximum luminance, while "Imin, th" is the luminance increased by a certain rate (for example 10%) from the minimum luminance.

When the rotational angular velocity of the galvanometer mirror 2 pursues perfectly the test pattern P, the images of the test pattern P even taken more than once stand still and the edge appears relatively sharply on the detection face 31 of the CCD camera 3 as shown in Fig. 6(b). If the rotational angular velocity of the galvanometer mirror 2 does not pursue the test pattern P, each image of the test pattern P moves in the +Y or -Y direction on the detection face 31 of the CCD camera 3 every time the image is taken, as shown in Fig. 6 (a).

Images are captured with the rotational angular velocity of the galvanometer mirror 2 changed. When the edge position is moved at each capturing as shown in Fig. 6 (a), it can be said that the rotational angular velocity of the galvanometer mirror 2 is not proper. The rotational angular velocity of the galvanometer mirror 2 at which the edge position is fixed as shown in Fig. 6 (b) is determined as an optimum velocity. This rotational angular velocity of the galvanometer mirror 2 is not required to be calculated with the use of the equation (a) or (b). Accordingly, the optimum rotational angular velocity of the galvanometer mirror 2 can be determined without knowing the structure of the measuring apparatus (L or $\theta$ ).

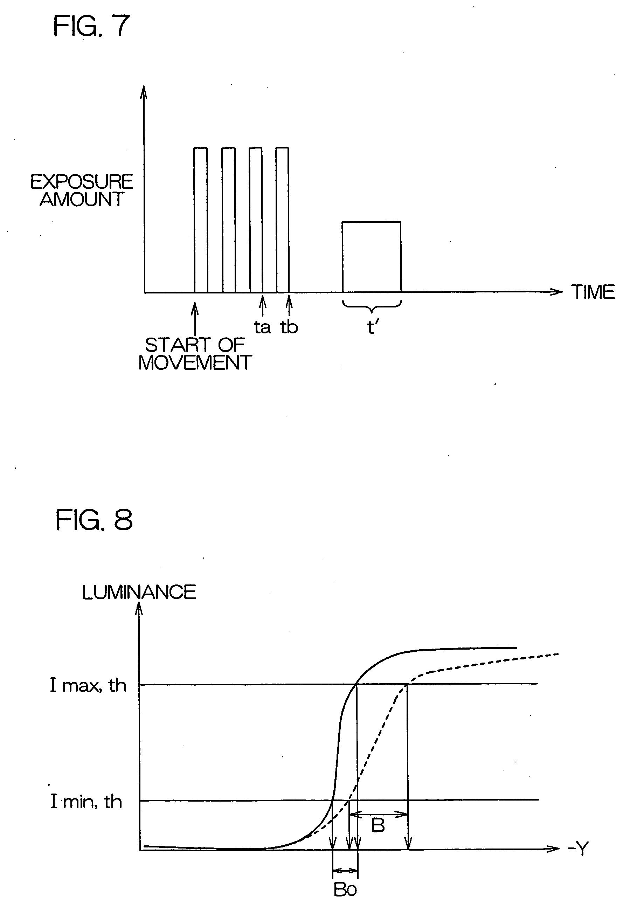

The following description will discuss another method of determining the rotational angular velocity of the galvanometer mirror 2. According to this method, the computer control unit 6 is arranged to control such that, as shown in Fig. 7, the state of light exposure of the CCD camera 3 is maintained for a predetermined period of time t' during the rotation of the galvanometer mirror 2 after a trigger for rotation has been given to the galvanometer mirror 2 . The "predetermined period of time" during which the state of light exposure of the CCD camera 3 is maintained may be set to a period of time during which the motion image quality on the screen 5 is measured and evaluated with high precision. The state of light exposure may always be maintained for a predetermined period of time, or the shutter may be opened/ closed more than once during this predetermined period of time.

Fig. 8 shows luminance distributions of images detected by the CCD camera detection face 31 when the state of light exposure of the CCD camera 3 is maintained for the predetermined period of time t'. In Fig. 8, the axis of abscissas represents the picture elements arranged in the scanning direction, while the axis of ordinates represents the luminance. The number of picture elements between the luminance Imax,th lowered by a certain rate (for example 10%) from the maximum luminance, and the luminance Imin, th increased by a certain rate (for example 10%) from the minimum luminance is called a "blurred edge width BEW" (represented by B, B0 in Fig. 8).

When the rotational angular velocity of the galvanometer mirror 2 pursues perfectly the test pattern P, the image of the test pattern P stands still and the edge appears relatively sharply on the detection face 31 of the CCD camera 3. If the rotational angular velocity of the galvanometer mirror 2 does not pursue the test pattern P, the image of the test pattern P moves in the +Y or -Y direction on the detection face 31 of the CCD camera 3, causing the edge image to get blurred.

In Fig. 8, the broken line shows the luminance distribution obtained at the time when the rotational angular velocity $\omega$ of the galvanometer mirror 2 is not proper. At this time, the blurred edge width is designated by B. The solid line shows the luminance distribution obtained at the time when the rotational angular velocity $\omega$ of the galvanometer mirror 2 is proper. At this time, the blurred edge width is minimized. This minimum blurred edge width is designated by B0.

Images are captured with the rotational angular velocity $\omega$ of the galvanometer mirror 2 changed. Then, the rotational angular velocity of the galvanometer mirror 2 at which such a minimum blurred edge width B0 is obtained can be determined as an optimum rotational angular velocity $\omega$ of the galvanometer mirror 2. In this method, too, the optimum rotational angular velocity $\omega$ of the galvanometer mirror 2 is not required to be calculated with the use of the equation (a) or (b). Accordingly, the optimum rotational angular velocity $\omega$ of the galvanometer mirror 2 can be determined without knowing the structure of the measuring apparatus (L or $\theta$).

The minimum blurred edge width B0 includes a blurred edge width B' of the optical system such as the lens or the like. Accordingly, it is desired that with the galvanometer mirror 2 fixed, the stationary test pattern P is captured to obtain the blurred edge width B' of the optical system such as the lens or the like, and that this blurred edge width B' is subtracted from the blurred edge width B0 to obtain a net blurred edge width B0.

When a plurality of moving velocities vp of the test pattern P are set and a minimum blurred edge width B0 is obtained for each of these moving velocities vp, the blurred edge width B0 becomes a function of the moving velocity vp of the test pattern P. As the moving velocity vp is faster, the blurred edge width B0 is wider. As the moving velocity vp is slower, the blurred edge width B0 is narrower. Accordingly, the blurred edge widths B0 are plotted with respect to the moving velocities, and the inclination (time in unit) thus obtained is defined as N_BEW. It is known that the BEW normalized by the moving velocity, i.e., N_BEW is equivalent to the response time of the display device. Accordingly, the motion image quality of the display device can be evaluated with the use of N_BEW.

The following description will discuss another method of optimizing the mirror rotational velocity in addition to the above-mentioned methods.

According to this method, the computer control unit 6 is arranged to control such that the galvanometer mirror 2 is fixed, that a short light-exposure period of time is set to the CCD camera 3 and that an image is frequently captured at short time intervals. On the detection face 31 of the CCD camera 3, the image of the test pattern P (i.e., edge) is moved, according to the movement of the test pattern P, in the -Y direction for each capturing.

For example, it is now supposed that the number of picture elements in the transverse direction is 1024, and that the test pattern P passes through 1024 picture elements in 1.4 seconds. For example, it is now supposed that the light-exposure time of the CCD camera 3 is set at 1/20 second, and that a picture is frequently taken at time intervals of 0.1 second.

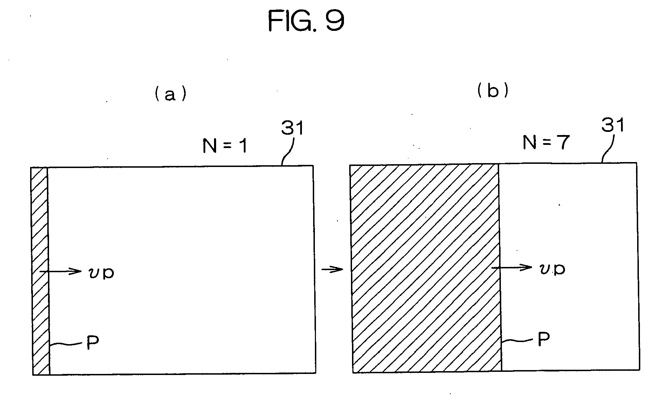

A plural number of capturings is represented by N (N = 1,2,3,..., 14). Fig. 9(a) shows the image of the test pattern P captured, for example, at N = 1 (first time) when the test pattern P starts moving, while Fig. 9 (b) shows the image of the test pattern P captured, for example, at N = 7 (seventh time) when the edge of the test pattern P reaches the center of the detection face 31 of the CCD camera 3.

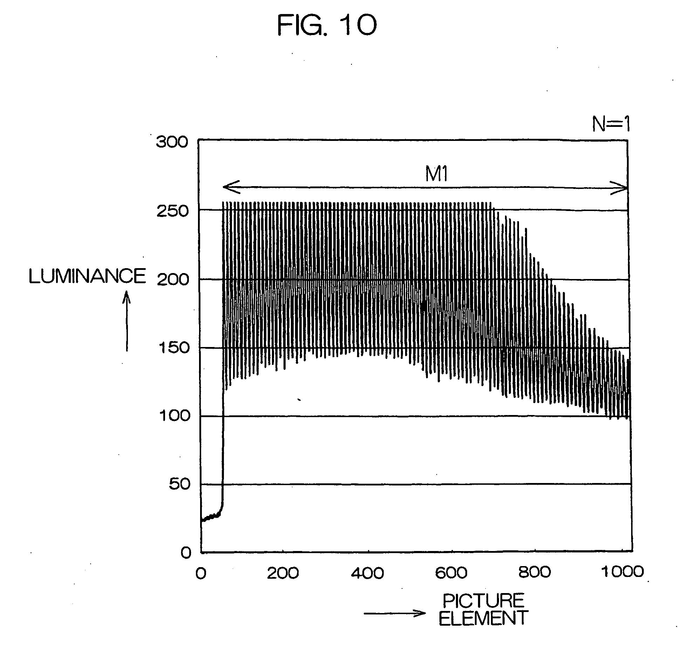

Fig. 10 to Fig. 13 show luminance distributions of images detected by the CCD camera detection face 31. In Fig. 10 to Fig. 13, the axis of abscissas represents the picture elements arranged in the scanning direction, while the axis of ordinates represents the luminance (relative value). Each graph is discontinuous because the picture elements on the CCD camera detection face 31 are discretely arranged.

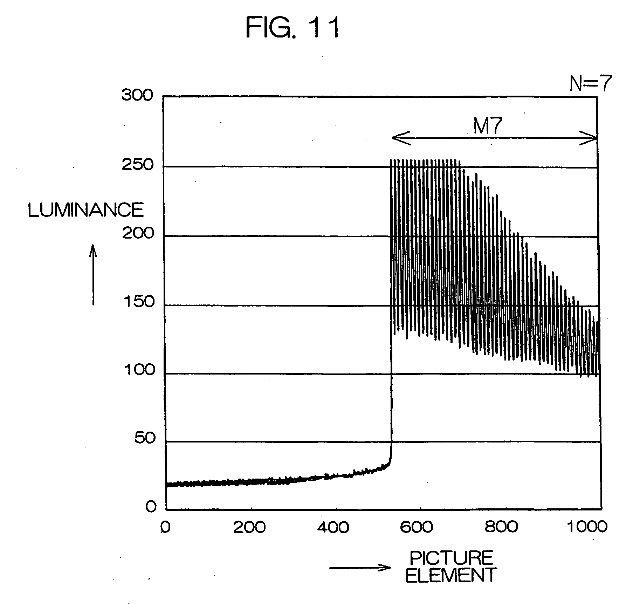

Fig. 10 shows a luminance distribution at the capturing point of time N = 1. The luminance rises up from a position of the small number of picture elements (about 50) at the left side of the CCD camera detection face 31. It is now supposed that the number of picture elements having high luminance is counted as M1. Fig. 11 shows a luminance distribution at the capturing point of time N = 7. The luminance rises up from a position of the intermediate number of picture elements (about 550) at the center of the CCD camera detection face 31. It is now supposed that the number of picture elements having high luminance is counted as M7.

Based on Figs. 10 and 11, when the difference (M1 - M7) between the numbers of picture elements having high luminance, is calculated, and the value thus calculated is multiplied by the picture element pitch and then divided by the passage period of time from N = 1 to N = 7, the scroll velocity on the CCD camera detection face 31 can be calculated.

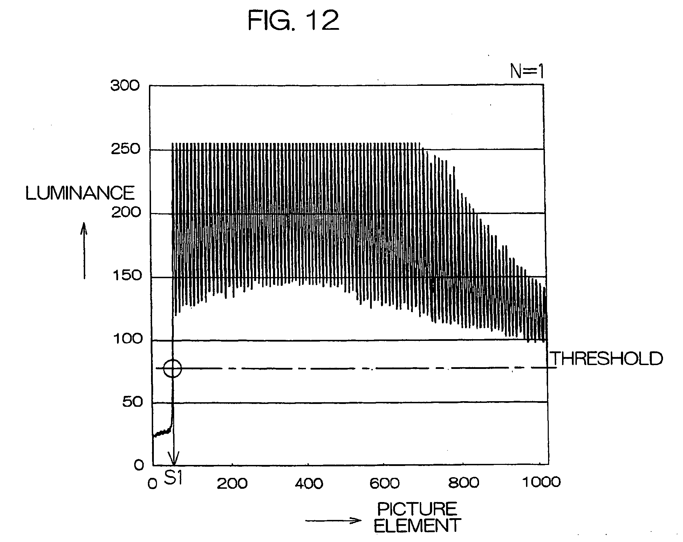

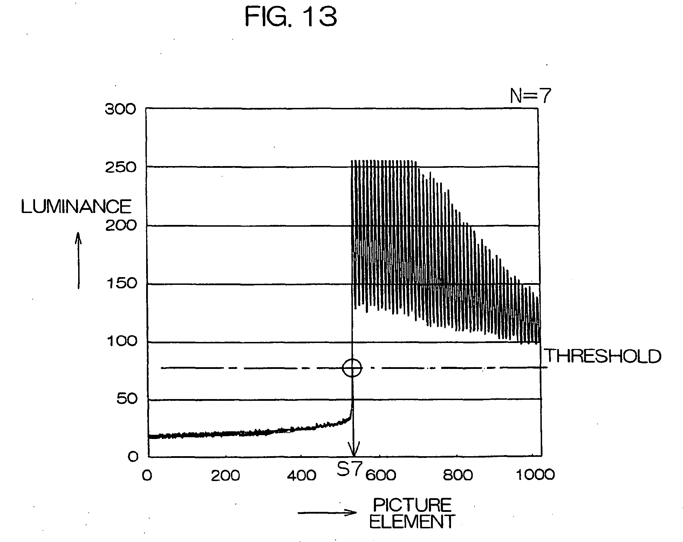

Fig. 12 shows a luminance distribution at the capturing point of time N = 1. To detect the boundary of the luminance rise, a threshold is set, and the picture element position S1 where the luminance exceeds the threshold is referred to as the test pattern edge. Fig. 13 shows a luminance distribution at the capturing point of time N = 7. To detect the boundary of the luminance rise, a threshold is set. The picture element position where the luminance exceeds the threshold is designated by S7. When the difference (S7 - S1) between the picture element positions is multiplied by the picture element pitch, and then divided by the passage period of time from N = 1 to N = 7, the scroll velocity of the test pattern on the CCD camera detection face 31 can be calculated.

In the manner discussed in the foregoing, the scroll velocity of the test pattern on the CCD camera detection face 31 can be calculated. This scroll velocity is equivalent to "v" in the equation (a) or (b) mentioned earlier. Accordingly, with the use of the equation (a) or (b) , the rotational angular velocity ω of the galvanometer mirror 2 corresponding to v can be obtained.

According to the embodiment of the present invention discussed in the foregoing, control is made such that there determined, based on a detection signal of the test pattern P contained in a motion image displayed on the screen 5, the rotational angular velocity of the galvanometer mirror 2 which pursues the movement of the test pattern P, and that a trigger for rotation is given to the galvanometer mirror 2 such that the galvanometer mirror 2 is rotated at the angular velocity corresponding to the moving velocity of the test pattern P. Accordingly, even without electric synchronism with a motion image signal, there obtained, on the image sensor detection screen 5, an image which perfectly keeps pace with the movement of a motion image. Based on the image thus obtained, the motion image quality on the screen 5 can be evaluated.

In the foregoing, embodiments of the present invention have been discussed. However, the present invention should not be construed as limited to the above-mentioned embodiments. In the present invention discussed in the foregoing, the movement of the test pattern is one-dimensional, and no information is therefore contained, on the image displayed on the detection face of the CCD camera 3, in a direction vertical to the direction in which the test pattern moves. Accordingly, when a direction vertical to the movement of the test pattern represents the sum of the picture element signals on the detection face of the CCD camera 3, the noise components of the picture element signals can be reduced to improve the detection sensitivity.

When a color CCD camera is used as the CCD camera, an image for each color can be formed on the detection face, and the differences in N_BEW among colors can be calculated to measure a color drift. Also, measurement may be made with the use of a plurality of color filters which can be switched to a monochrome CCD camera. In such a case, without use of a color CCD camera, there may be produced effects similar to those produced with the use of a color CCD camera.

Instead of the galvanometer mirror, a structure comprising a mirror mounted on the rotary shaft of a stepping motor or a servomotor may be adopted. Further, as mentioned earlier, the galvanometer mirror and the CCD camera may not be disposed independently from each other, but a CCD camera itself may be rotationally driven by a rotational driving motor. Further, a variety of modifications can be made within the scope of the invention.

**Claims**

1.  A screen motion image quality measuring/evaluating apparatus for measuring and evaluating, based on the movement of a test pattern displayed on the screen of a display device to be evaluated, the quality of a motion image on the screen,
    the apparatus comprising: a rotatable mirror; an image sensor for capturing the screen through the mirror; a rotational driving unit for rotationally driving the mirror; a control unit connected to the rotational driving unit; and an image processing unit,
    the control unit being arranged such that when it is detected based on a change in the luminance of a detection screen of the image sensor that the test pattern displayed on the screen has passed a predetermined position on the screen, a rotational driving signal is supplied to the rotational driving unit such that the mirror starts rotating as keeping pace with the movement of the test pattern.

2.  A screen motion image quality measuring/evaluating apparatus according to Claim 1, wherein the control unit is arranged such that after the test pattern displayed on the screen has started moving, the screen is captured more than once by the image sensor, and that based on the images thus captured more than once, it is detected whether or not the test pattern has passed a predetermined position of the screen.

3.  A screen motion image quality measuring/evaluating apparatus according to Claim 1, wherein
    the test pattern repeatedly appears on the screen andmoves in the same direction at the same velocity,
    the control unit is arranged to observe the image of the test pattern appearing on the detection screen of the image sensor during the rotation of the mirror, and to determine the mirror rotational velocity at which the image stands still, and
    the rotational driving signal supplied to the rotational driving unit comprises information instructing that the mirror rotates at the rotational velocity thus determined.

4.  A screen motion image quality measuring/evaluating apparatus according to Claim 1, wherein
    the test pattern repeatedly appears on the screen andmoves in the same direction at the same velocity,
    the control unit is arranged to observe a test pattern blurred edge width which appears, along the scanning direction, on the detection screen of the image sensor during the rotation of the mirror, and to determine the mirror rotational velocity at which the blurred edge width is minimized, and
    the rotational driving signal supplied to the rotational driving unit comprises information instructing that the mirror rotates at the rotational velocity thus determined.

5.  A screen motion image quality measuring/evaluating apparatus according to Claim 4, wherein the image processing unit is arranged to evaluate the quality of a motion image on the screen with the use of the minimized blurred edge width.

6.  A screen motion image quality measuring/evaluating apparatus according to Claim 1, wherein
    the test pattern repeatedly appears on the screen andmoves in the same direction at the same velocity,
    the control unit is arranged to calculate the moving velocity of the test pattern based on the movement of the test pattern appearing on the detection screen of the image sensor while the mirror is fixed, and to determine the mirror rotational velocity based on the test pattern moving velocity thus calculated, and
    the rotational driving signal supplied to the rotational driving unit comprises information instructing that the mirror rotates at the rotational velocity thus determined.

7.  A screen motion image quality measuring/evaluating apparatus according to any of Claims 1 to 6, comprising a rotatable camera and a rotational driving unit for rotationally driving the camera, instead of: the rotatable mirror; the image sensor for capturing the screen through the mirror; and the rotational driving unit for rotationally driving the mirror.

8.  A screen motion image quality measuring/evaluating apparatus for measuring and evaluating, based on the movement of a test pattern displayed on the screen of a display device to be evaluated, the quality of a motion image on the screen,
    the apparatus comprising: a rotatable mirror; an image sensor for capturing the screen through the mirror; a rotational driving unit for rotationally driving the mirror; a control unit connected to the rotational driving unit; and an image processing unit,
    the test pattern repeatedly appearing on the screen and moving in the same direction at the same velocity, and

the control unit being arranged to observe the image of the test pattern appearing on the detection screen of the image sensor during the rotation of the mirror, to determine the mirror rotational velocity at which the image stands still, and to rotationally drive the mirror at the rotational velocity thus determined.

9. A screen motion image quality measuring/evaluating apparatus for measuring and evaluating, based on the movement of a test pattern displayed on the screen of a display device to be evaluated, the quality of a motion image on the screen,
the apparatus comprising: a rotatable mirror; an image sensor for capturing the screen through the mirror; a rotational driving unit for rotationally driving the mirror; a control unit connected to the rotational driving unit; and an image processing unit,
the test pattern repeatedly appearing on the screen and moving in the same direction at the same velocity, and
the control unit being arranged to observe a test pattern blurred edge width which appears, along the scanning direction, on the detection screen of the image sensor during the rotation of the mirror, to determine the mirror rotational velocity at which the blurred edge width is minimized, and to rotationally drive the mirror at the rotational velocity thus determined.

10. A screen motion image quality measuring/evaluating apparatus according to Claim 9, wherein the image processing unit is arranged to evaluate the quality of a motion image on the screen with the use of the minimized blurred edge width.

11. A screen motion image quality measuring/evaluating apparatus according to any of Claims 8 to 10, comprising a rotatable camera and a rotational driving unit for rotationally driving the camera, instead of: the rotatable mirror; the image sensor for capturing the screen through the mirror; and the rotational driving unit for rotationally driving the mirror.

12. A screen motion image quality measuring/evaluating method of measuring and evaluating, based on the movement of a test pattern displayed on the screen of a display device to be evaluated, the quality of a motion image on the screen, the method comprising the steps of:

(1) capturing an image of the test pattern while the test pattern is moved on the screen at a predetermined velocity and while the visual field of an image sensor is moved on the screen; and
(2) determining the moving velocity of the image sensor visual field at which the test pattern image position stands still, and evaluating the quality of a motion image on the screen based on the test pattern image captured at the velocity thus predetermined.

13. A screen motion image quality measuring/evaluating method of measuring and evaluating, based on the movement of a test pattern displayed on the screen of a display device to be evaluated, the quality of a motion image on the screen, the method comprising the steps of:

(1) capturing an image of the test pattern while the test pattern is moved on the screen at a predetermined velocity and while the visual field of an image sensor is moved on the screen;
(2) observing a blurred edge width appearing, along the scanning direction, on the test pattern image thus captured; and
(3) determining the moving velocity of the image sensor visual field at which the blurred edge width is minimized, and evaluating the quality of a motion image on the screen based on the image of the test pattern captured at the velocity thus predetermined.

14. A screen motion image quality measuring/evaluating apparatus for measuring and evaluating, based on the movement of a test pattern displayed on the screen of a display device to be evaluated, the quality of a motion image on the screen,
the apparatus comprising: a rotatable mirror; an image sensor for capturing the screen through the mirror; a rotational driving unit for rotationally driving the mirror; a control unit connected to the rotational driving unit; and an image processing unit,
the test pattern repeatedly appearing on the screen and moving in the same direction at the same velocity, and
the control unit being arranged to calculate the moving velocity of the test pattern based on the movement of the test pattern appearing on the detection screen of the image sensor while the mirror is fixed, to determine the mirror rotational velocity based on the test pattern moving velocity thus calculated, and to rotationally drive the mirror at the rotational velocity thus determined.

**15.** A screen motion image quality measuring/evaluating apparatus according to Claim 14, comprising a rotatable camera and a rotational driving unit for rotationally driving the camera, instead of: the rotatable mirror; the image sensor for capturing the screen through the mirror; and the rotational driving unit for rotationally driving the mirror.

**16.** A screen motion image quality measuring/evaluating method of measuring and evaluating, based on the movement of a test pattern displayed on the screen of a display device to be evaluated, the quality of a motion image on the screen, the method comprising the steps of:

(1) capturing an image of the test pattern more than once while the test pattern is moved on the screen at a predetermined velocity and while the visual field of an image sensor is fixed on the screen;
(2) observing the moving velocity, on the detection screen, of the test pattern image thus captured; and
(3) calculating and determining the moving velocity of the image sensor visual field corresponding to the moving velocity of the test pattern image on the detection screen, and evaluating the quality of a motion image on the screen based on the image of the test pattern captured at the velocity thus determined.

# FIG. 1

# FIG. 2

# FIG. 3

P

ta ⬜ 31

tb ⬜ 31

TIME

← TRIGGER FOR ROTATION

tc ⬜ 31

td ⬜ 31

te ⬜ 31

tf ⬜ 31

→ X

# FIG. 4

EXPOSURE
AMOUNT

. . .

TIME

ta tb tc td

START OF
MOVEMENT

FIG. 5

FIG. 6

FIG. 7

EXPOSURE
AMOUNT

TIME

ta tb

t'

START OF
MOVEMENT

FIG. 8

LUMINANCE

I max, th

I min, th

B

-Y

Bo

# FIG. 9

( a )　　　　　　　　　　　　　　( b )

N = 1　　　31　　　　　　　N = 7　　　31

→ υp

P

→

→ υp

P

# FIG. 10

# FIG. 11

FIG. 12

# FIG. 13

## INTERNATIONAL SEARCH REPORT

| International application No. |
| --- |
| PCT/JP03/08257 |

**A. CLASSIFICATION OF SUBJECT MATTER**
Int.Cl$^7$ H04N13/04

According to International Patent Classification (IPC) or to both national classification and IPC

**B. FIELDS SEARCHED**

Minimum documentation searched (classification system followed by classification symbols)
Int.Cl$^7$ H04N13/04

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2001-054147 A (Nippon Hoso Kyokai),<br>23 February, 2001 (23.02.01),<br>Page 4, left column, lines 5 to 40<br>(Family: none) | 8,12<br>1-7,9-11,<br>13-16 |
| A | JP 2001-042845 A (Nippon Hoso Kyokai),<br>16 February, 2001 (16.02.01),<br>Full text<br>(Family: none) | 1-16 |

☐ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 September, 2003 (30.09.03) | 14 October, 2003 (14.10.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)